# EUROPÄISCHE PATENTSCHRIFT

(11) **EP 1 803 209 B1**
(45) Veröffentlichungstag und Bekanntmachung des Hinweises auf die Patenterteilung: **01.09.2010**
(21) Anmeldenummer: 05801367.3
(22) Anmeldetag: 06.10.2005
(51) Int. Cl.: H02K 11/00

(54) **VORRICHTUNG ZUR ENERGIESPARENDEN ERFASSUNG EINER BETRIEBSGRÖSSE EINES BEWEGBAREN ELEMENTS**
DEVICE FOR THE POWER-SAVING DETECTION OF AN OPERATING VARIABLE OF A MOVING ELEMENT
DISPOSITIF POUR DETERMINER DE MANIERE ECONOME EN ENERGIE UNE GRANDEUR D'EXPLOITATION D'UN ELEMENT MOBILE

(30) Priorität: 15.10.2004 DE 102004050566
(43) Veröffentlichungstag der Anmeldung: 04.07.2007
(73) Patentinhaber: ROBERT BOSCH GMBH, 70442 Stuttgart (DE)
(72) Erfinder: KNECHT, Gerhard, 76473 Iffezheim (DE); ROTH, Karl-Juergen, 71701 Schwieberdingen (DE); JAERVELAEINEN, Tero, 77815 Buehl (DE)
(86) Internationale Anmeldenummer: PCT/EP2005/055054
(87) Internationale Veröffentlichungsnummer: WO 2006/042790

(56) Entgegenhaltungen:
- DE-A1- 3 136 746
- DE-C1- 19 514 257
- US-A1- 2004 095 146
- US-B1- 6 703 742

## Beschreibung

### Stand der Technik

Die Erfindung betrifft eine Vorrichtung zur energiesparenden Erfassung einer Betriebsgröße eines bewegbaren Elements nach der Gattung des unabhängigen Anspruchs.

Es ist bekannt, zur berührungslosen Erfassung von Betriebsgrößen, wie beispielsweise der berührungslosen Erfassung eines Drehwinkels einer Motorwelle oder einer Lageposition eines Schiebedachs, Sensorelemente einzusetzen.

### Vorteile der Erfindung

Gegenüber dem genannten Stand der Technik weist die erfindungsgemäße Vorrichtung den Vorteil auf, dass zur Erfassung einer Betriebsgröße eines bewegbaren Elements mit zumindest einem Sensorelement, das die Betriebsgröße misst, und mit einer Rechnereinheit, die die gemessene Betriebsgröße verarbeitet, die Rechnereinheit zumindest ein Schaltmittel steuert zur Aktivierung oder Deaktivierung des zumindest einen Sensorelements. Auf diese Weise kann eine energiesparende Erfassung der Betriebsgröße ermöglicht werden.

Weiterhin ist vorgesehen, dass eine verkettete, induzierte Spannung eines das bewegbare Element antreibenden Elektromotors gemessen wird und dass in Abhängigkeit von der gemessenen, induzierten Spannung das die Rechnereinheit zur Aktivierung bzw. Deaktivierung des zumindest einen Sensorelements die gemessene, verkettete, induzierte Spannung des Elektromotors verwendet. Weiterhin erfolgt die Aktivierung bzw. Deaktivierung des zumindest einen Sensorelements periodisch mit einer von der gemessenen, verketteten Spannung abhängigen Abtastperiode T_{A}. Auf diese Weise ist es möglich, bei schnellen, mechanischen Bewegungen des bewegbaren Elements die Abtastperiode zu verkürzen, um eine höhere Auflösung und somit eine höhere Genauigkeit bei der Erfassung der Betriebsgröße zu erzielen.

In einer vorteilhaften Ausgestaltung erfolgt die Energieversorgung der Rechnereinheit über das Schaltmittel, wobei ein Kondensator zur Energieversorgung der Rechnereinheit bei geöffnetem Schaltmittel dient. Bei durch die Rechnereinheit in einem geschlossenen Zustand verbrachten Schaltmittel wird der Kondensator dann über eine Diode wieder aufgeladen. Auf diese Weise kann ein sehr geringer Energieverbrauch der Vorrichtung gewährleistet werden und ein so genannter Ultra-Low-Power-Mikrocontroller als Rechnereinheit zum Einsatz kommen. Zudem ist durch dieses Merkmal eine permanente Energieversorgung der Rechnereinheit gewährleistet, so dass alle im Speicher der Rechnereinheit abgelegten Informationen erhalten bleiben.

Weitere Vorteile der Erfindung ergeben sich durch die in den abhängigen Ansprüchen angegebenen Merkmale sowie aus der Zeichnung und der nachfolgenden Beschreibung.

### Zeichnung

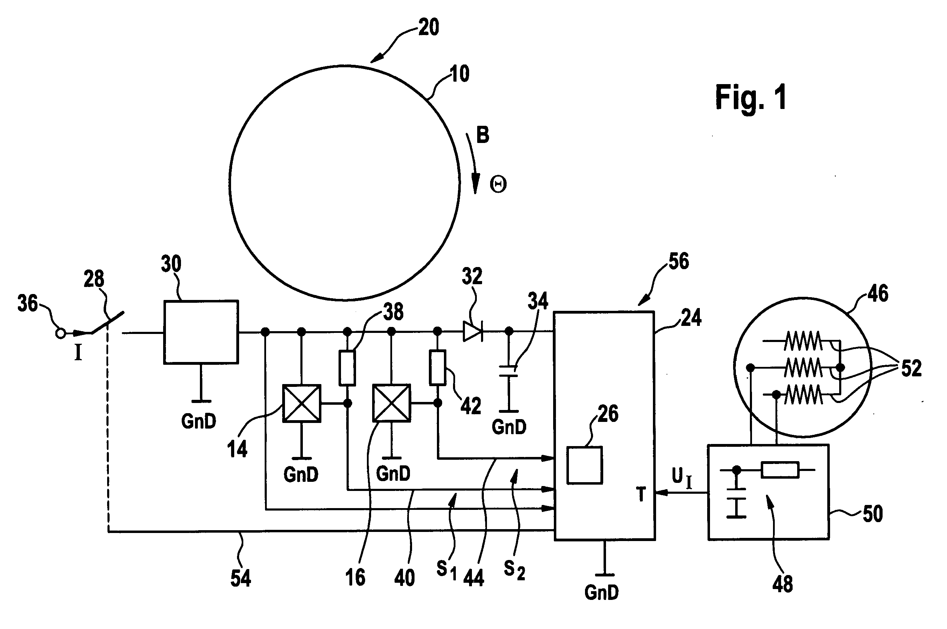

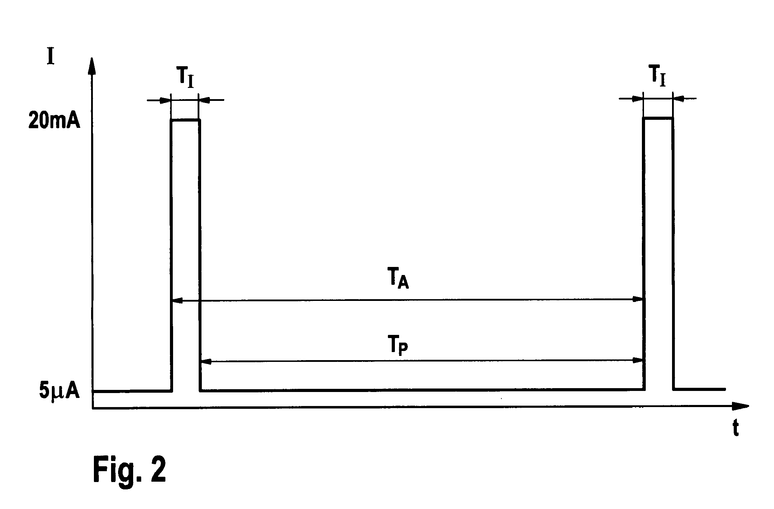

Die Erfindung wird im Folgenden anhand der Figuren 1 und 2 beispielhaft erläutert, wobei gleiche Bezugszeichen in den Figuren auf gleiche Bestandteile mit einer gleichen Funktionsweise hindeuten. Es zeigen
Fig. 1: eine schematische Darstellung der erfindungsgemäßen Vorrichtung zur energiesparenden Erfassung einer Betriebsgröße eines bewegbaren Elements und
Fig. 2: ein Diagramm des Strombedarfs zur Aktivierung bzw. Deaktivierung der beiden Sensorelemente in Abhängigkeit von der Zeit.

### Beschreibung

Figur 1 zeigt eine schematische Darstellung der erfindungsgemäßen Vorrichtung zur energiesparenden Erfassung einer Betriebsgröße B eines bewegbaren Elements 10. Die Betriebsgröße B wird mittels eines ersten und eines zweiten Sensorelements 14 und 16 gemessen. Ist das bewegbare Element 10 ein drehbares Element 20, beispielsweise eine Motorwelle, so ist die Betriebsgröße B zum Beispiel durch einen Drehwinkel Θ charakterisiert. Es können aber auch andere Betriebsgrößen B, wie die Drehrichtung, durch die beiden Sensorelemente 14 und 16 erfasst werden.

Eine Rechnereinheit 24 ist über eine aus einem Schaltmittel 28, einem Spannungsregler 30 sowie einer Diode 32 bestehenden Reihenschaltung mit einem Energieversorgungspunkt 36, der beispielsweise an einer nicht gezeigten 12-Volt-Batterie angeschlossen ist, verbunden. Weiterhin sind die Rechnereinheit 24 und der Spannungsregler 30 mit einem Bezugspotential GND verbunden.

Über das Schaltmittel 28 und den Spannungsregler 30 werden auch das erste und das zweite, nach dem Hallprinzip arbeitenden Sensorelement 14 bzw. 16 mit Energie versorgt. Beide Sensorelemente 14 und 16 sind weiterhin mit dem Bezugspotential GND verbunden. Während das erste Sensorelement 14 ein erstes Sensorsignal S₁ über eine erste, mittels eines ersten Widerstands 38 an die Energieversorgung angeschlossene Leitung 40 an die Rechnereinheit 24 übergibt, erfolgt die Übergabe eines zweiten Sensorsignals S₂ des zweiten Sensorelements 16 über eine zweite, mittels eines zweiten Widerstands 42 an die Energieversorgung angeschlossene Leitung 44. Für die Übergabe der beiden Sensorsignale S₁ und S₂ an die Rechnereinheit 24 sind die beiden Widerstände 38 und 40 nicht zwingend erforderlich; sie ermöglichen jedoch eine definierte Schaltspannung.

Da die beiden Sensorelemente 14 und 16, insbesondere wenn sie als Hall-Sensorelemente ausgeführt sind, einen verhältnismäßig hohen Energieverbrauch aufweisen, werden diese zur Energieeinsparung mittels des durch die Rechnereinheit 24 über eine Steuerleitung 54 gesteuerten Schaltmittels 28 bei Bedarf kurzzeitig aktiviert und ansonsten deaktiviert. Zu diesem Zweck wird die verkettete, induzierte Spannung U_{I} eines das bewegbare Element 10 ansteuernden Elektromotors 46 gemessen und an die Rechnereinheit 24 übergeben. Dabei erfolgt die Messung an zumindest zwei Strängen 52 des Elektromotors 46 mit Hilfe eines aus einem RC-Glied 48 bestehenden Integrators 50. Es sind aber auch andere, aus dem Stand der Technik bekannte Vorrichtungen und Verfahren zur Messung der verketteten, induzierten Spannung U_{I} denkbar, auf die hier nicht näher eingegangen werden soll.

In Figur 3 ist ein Diagramm des Strombedarfs zur Aktivierung bzw. Deaktivierung der beiden Sensorelemente 14 und 16 sowie der Rechnereinheit 24 in Abhängigkeit von der Zeit t dargestellt. Die Aktivierung bzw. Deaktivierung der beiden Sensorelemente 14 und 16 erfolgt periodisch mit der Abtastperiode T_{A}, wobei das Schaltmittel 28 zur Aktivierung während der Impulsdauer T_{I} geschlossen und während der Pausendauer T_{P} zur Deaktivierung geöffnet ist. Sind die beiden Sensorelemente 14 und 16 aktiviert, so wird ein Strom I von ca. 20 mA benötigt, wohingegen bei geöffnetem Schaltmittel 28 während der Pausendauer T_{P} lediglich ein Strom I von ca. 5 mA fließt. In Verbindung mit anderen Sensorelementen oder einer abweichenden Anzahl von Sensorelementen können diese Werte mehr oder weniger von den hier genannten abweichen.

Die Abtastperiode T_{A} wird nun in Abhängigkeit von der verketteten, induzierten Spannung U_{I} des Elektromotors 46 verändert. Liegt die verkettete, induzierte Spannung U_{I} beispielsweise unter einem definierten Schwellwert T, d.h. dreht sich der Elektromotor 46 mit einer verhältnismäßig geringen Drehzahl, zum Beispiel 1000 U⁻¹, so wird eine große Abtastperiode T_{A}, beispielsweise 12 ms, gewählt. Auf diese Weise können zum Beispiel während einer Umdrehung 5 Abtastungen erfolgen. Liegt die gemessene, verkettete, induzierte Spannung U_{I} dagegen oberhalb des definierten Schwellwertes T, d.h. der Elektromotor 46 dreht mit einer hohen Drehzahl, zum Beispiel 10000 U⁻¹, so kann die Abtastperiode T_{A} entsprechend verkürzt werden, beispielsweise auf 1,2 ms, was einen erhöhten Energieverbrauch durch die beiden Sensorelemente 14 und 16 zur Folge hat. Auf diese Weise ist es möglich, den Energiebedarf in Abhängigkeit von der Drehzahl des Elektromotors 46 bzw. des mit dem Elektromotor 46 über ein nicht gezeigtes Getriebe oder direkt verbundenen, bewegbaren Elements 10 zu steuern.

Oftmals ist es wichtig, dass die erfasste und in einem Speicher 26 der Rechnereinheit 24 abgelegte Betriebsgröße B auch bei einer plötzlichen Unterbrechung der Energieversorgung nicht verloren geht. Dies wird zum Einen dadurch erzielt, dass als Rechnereinheit 24 ein Ultra-Low-Power-Mikrocontroller 56 mit sehr geringem Energieverbrauch eingesetzt wird. Zum Anderen erfolgt die Energieversorgung des Ultra-Low-Power-Mikrocontrollers 56 über das mit einem Energieversorgungspunkt 36 verbundene Schaltmittel 28, wobei ein zwischen die Kathodenseite der Diode 32 und dem Bezugspotential GND geschalteter Kondensator 34 zur Energieversorgung des Ultra-Low-Power-Mikrocontrollers 56 bei geöffnetem Schaltmittel 28 dient, der wiederum bei geschlossenem Schaltmittel 34 über die Diode 32 geladen wird.

Es sei abschließend noch darauf hingewiesen, dass die erfindungsgemäße Vorrichtung weder auf die Figuren 1 und 2 noch auf die genannten Werte, beispielsweise für die Abtastperiode T_{A}, die Umdrehungszahl des Elektromotors 46 oder die Anzahl der Sensorelemente beschränkt ist. Weiterhin sind der Einsatz des in Figur 2 gezeigten Spannungsreglers 30 sowie des Integrators 50 zur Bestimmung der verketteten, induzierten Spannung U_{I} nicht einschränkend für die Erfindung zu sehen. Schließlich können als Schaltmittel 28 ein Relais, ein bipolarer Transistor, ein Feldeffekt-Transistor, ein MOSFET oder dergleichen zum Einsatz kommen.

## Patentansprüche

1. Vorrichtung zur energiesparenden Erfassung einer Betriebsgröße (B) eines bewegbaren Elements (10) mit zumindest einem Sensorelement (14, 16), das die Betriebsgröße (B) misst, und mit einer Rechnereinheit (24), die die gemessene Betriebsgröße (B) verarbeitet, **dadurch gekennzeichnet, dass** die Rechnereinheit (24) zumindest ein Schaltmittel (28) steuert zur Aktivierung oder Deaktivierung des zumindest einen Sensorelements (14, 16).

2. Vorrichtung nach Anspruch 1, **dadurch gekennzeichnet, dass** ein Elektromotor (46) das bewegbare Element (10) antreibt und dass die Rechnereinheit (24) zur Aktivierung bzw. Deaktivierung des zumindest einen Sensorelements (14, 16) eine gemessene, verkettete, induzierte Spannung (U_{I}) des Elektromotors (46) verwendet.

3. Vorrichtung nach Anspruch 1, **dadurch gekennzeichnet, dass** die Energieversorgung der Rechnereinheit (24) über das Schaltmittel (18) erfolgt, wobei ein Kondensator (34) zur Energieversorgung der Rechnereinheit (24) bei geöffnetem Schaltmittel (28) dient.

4. Vorrichtung nach Anspruch 3, **dadurch gekennzeichnet, dass** eine Diode (32) den Kondensator (34) bei geschlossenem Schaltmittel (28) auflädt.

5. Vorrichtung nach Anspruch 4, **dadurch gekennzeichnet, dass** die Aktivierung oder Deaktivierung des zumindest einen Sensorelements (14, 16) periodisch mit einer von der gemessenen, verketteten Spannung (U_{I}) abhängigen Abtastperiode (T_{A}) erfolgt.

6. Vorrichtung nach einem der vorhergehenden Ansprüche, **dadurch gekennzeichnet, dass** das zumindest eine Sensorelement (14, 16) ein nach einem Hallprinzip arbeitendes Sensorelement ist.

7. Vorrichtung nach Anspruch 1, **dadurch gekennzeichnet, dass** das bewegbare Element (10) ein drehbares Element (20) ist und dass die Betriebsgröße (B) ein Drehwinkel (Θ) des drehbaren Elements (20) ist.

## Claims

1. Device for the power-saving detection of an operating variable (B) of a movable element (10), having at least one sensor element (14, 16), which measures the operating variable (B), and having a computer unit (24) which processes the measured operating variable (B), **characterized in that** the computer unit (24) controls at least one switching means (28) in order to activate or deactivate the at least one sensor element (14, 16).

2. Device according to Claim 1, **characterized in that** an electric motor (46) drives the movable element (10), and **in that** the computer unit (24) uses a measured, phase-to-phase, induced voltage (U_{I}) of the electric motor (46) in order to activate or deactivate the at least one sensor element (14, 16).

3. Device according to Claim 1, **characterized in that** power is supplied to the computer unit (24) via the switching means (18), a capacitor (34) being used to supply power to the computer unit (24) when the switching means (28) is open.

4. Device according to Claim 3, **characterized in that** a diode (32) charges the capacitor (34) when the switching means (28) is closed.

5. Device according to Claim 4, **characterized in that** the at least one sensor element (14, 16) is periodically activated or deactivated with a sampling period (T_{A}) which is dependent on the measured phase-to-phase voltage (U_{I}).

6. Device according to one of the preceding claims, **characterized in that** the at least one sensor element (14, 16) is a sensor element which operates according to a Hall principle.

7. Device according to Claim 1, **characterized in that** the movable element (10) is a rotatable element (20), and **in that** the operating variable (B) is an angle of rotation (Θ) of the rotatable element (20).

## Revendications

1. Dispositif d'acquisition avec faible consommation d'énergie d'une grandeur opérationnelle (B) d'un élément (10) mobile, comprenant au moins un élément de détection (14, 16) qui mesure la grandeur opérationnelle (B) et comprenant une unité de calcul (24) qui traite la grandeur opérationnelle (B) mesurée, **caractérisé en ce que** l'unité de calcul (24) commande au moins un moyen de commutation (28) pour activer ou désactiver l'au moins un élément de détection (14, 16).

2. Dispositif selon la revendication 1, **caractérisé en ce qu'**un moteur électrique (46) entraîne l'élément mobile (10) et que l'unité de calcul (24), pour l'activation ou la désactivation de l'au moins un élément de détection (14, 16), utilise une tension (U₁) induite composée mesurée du moteur électrique (46).

3. Dispositif selon la revendication 1, **caractérisé en ce que** l'alimentation en énergie de l'unité de calcul (24) s'effectue par le biais du moyen de commutation (18), un condensateur (34) servant de source d'énergie pour l'unité de calcul (24) lorsque le moyen de commutation (28) est ouvert.

4. Dispositif selon la revendication 3, **caractérisé en ce qu'**une diode (32) charge le condensateur (34) lorsque le moyen de commutation (28) est fermé.

5. Dispositif selon la revendication 4, **caractérisé en ce que** l'activation ou la désactivation de l'au moins un élément de détection (14, 16) s'effectue de manière périodique à une période de palpage (T_{A}) qui dépend de la tension (U₁) composée mesurée.

6. Dispositif selon l'une des revendications précédentes, **caractérisé en ce que** l'au moins un élément de détection (14, 16) est un élément de détection qui fonctionne selon un principe d'effet Hall.

7. Dispositif selon la revendication 1, **caractérisé en ce que** l'élément mobile (10) est un élément rotatif (20) et que la grandeur opérationnelle (B) est un angle de rotation (Θ) de l'élément rotatif (20).
